# EUROPEAN PATENT APPLICATION

(11) **EP 4 657 570 A2**
(43) Date of publication of application: **03.12.2025**
(21) Application number: 25178938.4
(22) Date of filing: 27.05.2025
(51) Int. Cl.: H01M 4/525, H01M 4/62, H01M 10/0562

(54) **CATHODE FOR LITHIUM SECONDARY BATTERY AND SECONDARY BATTERY INCLUDING THE SAME**

(30) Priority: 28.05.2024 KR 20240069618
(71) Applicant: SK On Co., Ltd., Seoul 03161 (KR)
(72) Inventor: LEE, Seok Hee, 34124 Daejeon (KR); KWON, Mi Sook, 34124 Daejeon (KR)
(74) Representative: Prüfer & Partner mbB Patentanwälte · Rechtsanwälte

(57) **Abstract**

A cathode for a lithium secondary battery according to embodiments of the present disclosure includes a cathode current collector and a cathode active material layer. The cathode active material layer is disposed on at least one surface of the cathode current collector. The cathode active material layer includes a cathode active material, a solid electrolyte and carbon nanotubes. The carbon nanotubes have a specific surface area of 100 m²/g to 300 m²/g. The content of the carbon nanotubes is more than 0.25 wt% and less than 1.5 wt% based on the total weight of the cathode active material layer.

## Description

### BACKGROUND

### 1. Field

The embodiments of the present disclosure generally relate to a cathode for a lithium secondary battery and a lithium secondary battery including the same.

### 2. Description of the Related Art

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Among secondary batteries, a lithium secondary battery has a high operating voltage and a high energy density per unit weight, making it advantageous in terms of charging speed and lightweight design. In this regard, the lithium secondary battery has been actively developed and applied to various industrial fields.

Recently, to suppress explosions, ignition, etc. caused by side reactions and instability of liquid electrolyte solutions, all-solid-state batteries using solid electrolytes have been studied and developed.

However, various side reactions may occur between the solid electrolyte and the materials included in the electrode, and the electrochemical characteristics and efficiency may be degraded. For example, a conductive material included in the electrode may react with the solid electrolyte to generate byproducts.

Therefore, in order to improve the electrochemical compatibility of the electrode used in the all-solid-state battery with the solid electrolyte, it may be necessary to modify and treat the morphology or crystal structure, and/or enhance the properties of the materials included in the electrode.

### SUMMARY

An aspect of the present disclosure is to provide a cathode for a lithium secondary battery with improved electrochemical characteristics.

Another aspect of the present disclosure is to provide a lithium secondary battery with improved electrochemical characteristics.

A cathode for a lithium secondary battery according to exemplary embodiments includes: a cathode current collector; and a cathode active material layer. The cathode active material layer is disposed on at least one surface of the cathode current collector. The cathode active material layer includes a cathode active material, a solid electrolyte and carbon nanotubes. The carbon nanotube has a specific surface area of 100 m²/g to 300 m²/g. A content of the carbon nanotube is more than 0.25% by weight and less than 1.5% by weight based on the total weight of the cathode active material layer.

According to exemplary embodiments, the content of the carbon nanotubes may be 0.5% by weight to 1% by weight based on the total weight of the cathode active material layer.

According to exemplary embodiments, the carbon nanotubes may have a specific surface area of 150 m²/g to 250 m²/g.

According to exemplary embodiments, the carbon nanotubes may have an average diameter of 0.4 nm to 30 nm.

According to exemplary embodiments, a content of the solid electrolyte may be 5% by weight to 30% by weight based on the total weight of the cathode active material layer.

According to exemplary embodiments, a content of the cathode active material may be 70% by weight to 90% by weight based on the total weight of the cathode active material layer.

According to exemplary embodiments, a ratio of the content of the solid electrolyte to the content of the carbon nanotube may be 5 to 40 based on the total weight of the cathode active material layer.

According to exemplary embodiments, the solid electrolyte may be a sulfide-based solid electrolyte.

According to exemplary embodiments, the sulfide-based solid electrolyte may include at least one selected from the group consisting of a Li-P-S-based solid electrolyte, a Li-P-Ge-S-based solid electrolyte, and a Li-Si-O-S-Cl-based solid electrolyte.

According to exemplary embodiments, the cathode active material may include a lithium metal oxide containing nickel.

According to exemplary embodiments, a content of nickel in the lithium metal oxide may be 60 mol% or more based on the total number of moles of elements excluding lithium and oxygen.

According to exemplary embodiments, the cathode active material layer may have a volume resistivity of 100 Ω·cm to 50000 Ω·cm.

According to exemplary embodiments, a loading amount of the cathode active material layer may be 9 mg/cm² to 35 mg/cm².

A lithium secondary battery according to exemplary embodiments includes: the cathode; an anode disposed opposite to the cathode; and a solid electrolyte layer interposed between the cathode and the anode.

In the cathode for a lithium secondary battery according to exemplary embodiments of the present disclosure, side reactions between carbon nanotubes and the solid electrolyte may be suppressed. Accordingly, the capacity of the cathode may be maintained at a high level during repeated charge/discharge cycles of the battery.

The cathode for a lithium secondary battery according to exemplary embodiments of the present disclosure may have a high initial discharge capacity, thereby enabling the implementation of a high-capacity battery.

The lithium secondary battery according to exemplary embodiments of the present disclosure may exhibit improved cycle life characteristics and increased capacity.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a schematic cross-sectional view illustrating a cathode according to exemplary embodiments; and
FIG. 2 is a schematic cross-sectional view illustrating a secondary battery according to exemplary embodiments.

### DETAILED DESCRIPTION

A cathode for a lithium secondary battery according to an exemplary embodiment of the present disclosure includes a cathode active material layer including carbon nanotubes. In addition, a lithium secondary battery according to an exemplary embodiment of the present disclosure includes the cathode.

Hereinafter, embodiments of the present disclosure will be described in detail with reference to the accompanying drawings. However, these embodiments are merely examples, and the present disclosure is not limited to the specific embodiments described as examples.

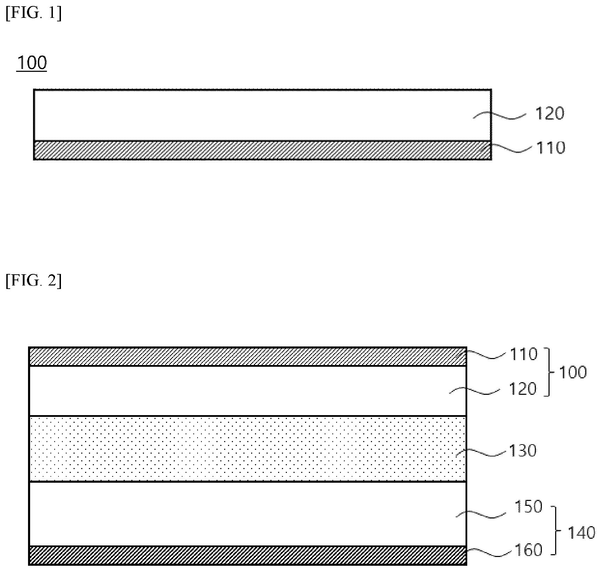

FIG. 1 is a schematic cross-sectional view illustrating a cathode according to exemplary embodiments.

Referring to FIG. 1, the cathode for a lithium secondary battery according to exemplary embodiments includes a cathode current collector 110 and a cathode active material layer 120 disposed on at least one surface of the cathode current collector 110. The cathode active material layer may have a multi-layer structure including cathode active materials, carbon nanotubes, and/or solid electrolytes with different types or contents.

The cathode active material layer 120 includes a cathode active material, a solid electrolyte, and carbon nanotubes.

The carbon nanotubes are materials having a cylindrical graphite nanostructure, and have high electrical conductivity, thereby increasing the electrical conductivity of the cathode active material layer as a conductive material.

Conventionally, a small amount of carbon nanotubes with a large surface area has been used to increase the electrical conductivity of the cathode active material layer. However, when the cathode active material layer includes a solid electrolyte, a solid electrolyte with low chemical stability (e.g., a sulfide-based solid electrolyte) may cause side reactions with the carbon nanotubes. In addition, the carbon nanotubes may react with the solid electrolyte included in the solid electrolyte layer disposed adjacent to the cathode. Accordingly, the performance of the battery may deteriorate.

According to exemplary embodiments, the carbon nanotubes may have a specific surface area of 100 m²/g to 300 m²/g. According to some embodiments, the carbon nanotube may have a specific surface area of 120 m²/g to 280 m²/g, 150 m²/g to 250 m²/g, or 175 m²/g to 250 m²/g.

Within the above range, the electrical conductivity of the cathode active material layer 120 may be sufficiently improved, while side reactions with the solid electrolyte (e.g., a sulfide-based solid electrolyte) may be suppressed. Accordingly, a decrease in capacity of the electrode may be suppressed even after repeated charge/discharge cycles of the battery, and the cycle life characteristics of the battery may be improved.

If the specific surface area of the carbon nanotubes is less than 100 m²/g, the effect of improving the electrical conductivity of the cathode active material layer is minimal, and thus a large amount of carbon nanotubes may be required to implement a cathode active material layer having the desired level of electrical conductivity. Accordingly, the content of the cathode active material in the cathode active material layer may be relatively reduced, thereby decreasing the capacity of the battery.

If the specific surface area of the carbon nanotubes exceeds 300 m²/g, side reactions may occur between the solid electrolyte and the carbon nanotubes in the cathode active material layer during repeated charge/discharge cycles of the battery, resulting in residual byproducts in the electrode or changes in the properties of the solid electrolyte and/or the carbon nanotubes. Accordingly, the cycle life characteristics of the battery may deteriorate.

The specific surface area of the carbon nanotubes may be measured by the Brunauer-Emmett-Teller (BET) method. The BET is one of the methods used to measure the specific surface area of powder or particles using physical adsorption and chemical adsorption, and may determine the specific surface area of the carbon nanotubes by measuring the amount of nitrogen (N₂) gas adsorbed onto the surface of the carbon nanotubes and calculating it using the BET equation.

Before measuring the specific surface area of the carbon nanotubes, the carbon nanotube sample, which is the target of the specific surface area measurement, should be thoroughly dried. If the carbon nanotube sample contains moisture or other solvents, the reliability of the measured specific surface area may be reduced.

According to exemplary embodiments, a content of the carbon nanotubes may be greater than 0.25% by weight ("wt%") and less than 1.5 wt% based on the total weight of the cathode active material layer 120. According to some embodiments, the content of the carbon nanotubes may be 0.3 wt% to 1.4 wt%, 0.4 wt% to 1.2 wt%, or 0.5 wt% to 1 wt% based on the total weight of the cathode active material layer 120.

Within the above range, both the electrical conductivity and capacity of the cathode active material layer 120 may be sufficiently improved, while side reactions with the solid electrolyte, such as a sulfide-based solid electrolyte, may be suppressed. Accordingly, capacity degradation of the electrode may be suppressed, and the cycle life characteristics of the battery may be improved even after repeated charge/discharge cycles of the battery.

If the content of the carbon nanotubes is 0.25 wt% or less, carbon nanotubes having a large specific surface area should be used to improve the electrical conductivity of the cathode active material layer so that a cathode active material layer with the desired level of electrical conductivity may be implemented. Accordingly, side reactions between the solid electrolyte and the carbon nanotubes in the cathode active material layer may increase, and the cycle life characteristics of the battery may deteriorate.

If the content of the carbon nanotubes is 1.5 wt% or more, the content of the cathode active material in the cathode active material layer may be relatively reduced, thereby decreasing the capacity of the battery.

According to exemplary embodiments, the carbon nanotubes may have an average diameter of 0.4 nm to 30 nm. According to some embodiments, the carbon nanotubes may have an average diameter of 1 nm to 27 nm, 5 nm to 24 nm, or 10 nm to 20 nm. Carbon nanotubes having a diameter within the above range may exhibit an appropriate specific surface area and high dispersibility, thereby sufficiently improving the electronic conductivity of the electrode active material layer, while minimizing side reactions within the electrode.

The average diameter of the carbon nanotubes may be determined by capturing an image using a scanning electron microscope (SEM) or a transmission electron microscope (TEM), measuring the widths of individual carbon nanotubes, and calculating the average value from a plurality of measurements.

According to exemplary embodiments, the cathode active material layer includes a solid electrolyte. When the cathode is applied to an all-solid-state battery, the solid electrolyte may serve as a medium through which lithium ions may migrate within the cathode active material layer.

According to exemplary embodiments, the solid electrolyte may be an oxide-based solid electrolyte or a sulfide-based solid electrolyte. For example, the sulfide-based solid electrolyte may include at least one selected from the group consisting of a Li-P-S-based solid electrolyte, a Li-P-Ge-S-based solid electrolyte, and a Li-Si-O-S-Cl-based solid electrolyte.

For example, the sulfide-based solid electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q}, (p and q are positive numbers, M is P, Si, Ge, B, Al, Ga or In), Li₇-ₓPS₆-ₓClₓ (0≤x≤2), Li₇₋ₓPS₆₋ₓBrₓ (0≤x≤2), Li₇₋ₓPS₆₋ₓIₓ (0≤x≤2), etc. These may be used alone or in combination of two or more thereof.

For example, the oxide-based solid electrolyte may include Li₂O-B₂O₃-P₂O₅, Li₂O-SiO₂, Li₂O-B₂O₃, Li₂O-B₂O₃-ZnO, etc. These may be used alone or in combination of two or more thereof.

According to exemplary embodiments, the content of the solid electrolyte may be 5 wt% to 30 wt% based on the total weight of the cathode active material layer 120. According to some embodiments, the content of the solid electrolyte may be 7 wt% to 25 wt% or 10 wt% to 20 wt% based on the total weight of the cathode active material layer 120.

Within the above range, the lithium ion conductivity of the cathode active material layer may be improved while increasing the capacity of the cathode.

According to exemplary embodiments, a ratio of the content of the solid electrolyte to the content of the carbon nanotubes may be 5 to 40 based on the total weight of the cathode active material layer 120. According to some embodiments, the ratio of the content of the solid electrolyte to the content of the carbon nanotubes may be 18 to 40 or 18 to 37 based on the total weight of the cathode active material layer 120.

Within the above range, the content ratio of the solid electrolyte to the carbon nanotubes may be appropriate, thereby improving the capacity and cycle life characteristics of the cathode.

According to exemplary embodiments, the cathode active material layer 120 includes a cathode active material. In one embodiment, the cathode active material may include a lithium metal oxide containing nickel. In some embodiments, the lithium metal oxide may further include at least one of manganese (Mn) and cobalt (Co).

According to exemplary embodiments, a content of nickel in the lithium metal oxide may be 60 mol% or more based on the total number of moles of elements excluding lithium and oxygen. According to some embodiments, the content of nickel in the lithium metal oxide may be 60 mol% to 95 mol%, 70 mol% to 95 mol%, 80 mol% to 95 mol%, or 90 mol% to 95 mol% based on the total number of moles of elements excluding lithium and oxygen.

In one embodiment, the lithium metal oxide may include a nickel-cobalt-manganese (NCM)-based oxide. The content of nickel may be the highest among the total number of moles of nickel, cobalt and manganese included in the lithium metal oxide, and may be, for example, 60 mol% or more, 70 mol% or more, 80 mol% or more, or 90 mol% or more.

Nickel may be provided as a transition metal associated with the output and capacity of the lithium secondary battery. Therefore, by employing a high-nickel-content (high-Ni) composition in the cathode active material, a high-capacity cathode and a high-capacity lithium secondary battery may be provided.

In this regard, as the content of nickel increases, long-term storage stability and cycle life stability of the cathode or secondary battery may be relatively reduced, and side reactions with the solid electrolyte may also increase. However, according to exemplary embodiments, by including cobalt, the cycle life stability and capacity retention characteristics may be improved through manganese while maintaining electrical conductivity.

In some embodiments, the lithium metal oxide may include a layered structure or crystal structure represented by Formula 1 below.

### [Formula 1]

### LiₐNiₓM_{b}O₂

In Formula 1, x, a and b may satisfy 0.8≤x≤0.95, 0.95≤a≤1.2, 0.05≤b≤0.2, and M may include at least one element of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In one embodiment, as described above, M may include Co and Mn, and may further include at least one element selected from among B, Al, Ti, V, Zn, Y, Nb, Zr, Mo, Sn, Mg, Sr, Ba and W.

For example, among the elements represented by M, elements other than Co and Mn may be provided as doping elements or surface coating elements for the lithium metal oxide. The lithium metal oxide may be passivated by the doping element or surface coating element, thereby further improving the crystal structure stability and chemical stability of the lithium metal oxide particles.

The chemical structure represented by Formula 1 indicates a bonding relationship between elements included in the layered structure or crystal structure of the lithium metal oxide and does not exclude other additional elements.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

According to exemplary embodiments, a content of the cathode active material may be 70 wt% to 90 wt% based on the total weight of the cathode active material layer 120. According to some embodiments, the content of the cathode active material may be 75 wt% to 85 wt% based on the total weight of the cathode active material layer 120.

The cathode active material layer 120 may further include a binder. The binder may include an organic binder such as vinylidene fluoride-hexafluoropropylene copolymer (PVDF-co-HFP), polyvinylidene fluoride (PVDF), polyacrylonitrile, polymethyl methacrylate, acrylonitrile butadiene rubber (NBR), polybutadiene rubber (BR), styrene-butadiene-styrene rubber (SBS), or an aqueous binder such as styrene-butadiene rubber (SBR), and may be used together with a thickener such as carboxymethyl cellulose (CMC). In one embodiment, a PVDF-based binder may be used as the cathode binder.

A content of the binder may be 0.1 wt% to 2 wt% based on the total weight of the cathode active material layer 120.

The cathode active material layer 120 may further include other conductive materials in addition to the carbon nanotubes. For example, the conductive material may include carbon-based conductive materials such as graphite, carbon black, graphene, vapor-grown carbon fibers (VGCFs), and/or metal-based conductive materials, including perovskite materials, such as tin, tin oxide, titanium oxide, LaSrCoO₃, and LaSrMnO₃.

For example, the above-described cathode active material, carbon nanotubes and solid electrolyte may be dispersed in a solvent together with a binder, and the like to prepare a cathode composition (e.g., in the form of a slurry). The cathode current collector 110 may be coated with the cathode composition, and then dried and roll-pressed to form a cathode active material layer.

The cathode current collector 110 may include a metal such as stainless steel, nickel, aluminum, titanium, copper, magnesium, iron, zinc, or an alloy thereof.

According to exemplary embodiments, the cathode active material layer 120 may have a volume resistivity of 100 Ω·cm to 50,000 Ω·cm. According to some embodiments, the cathode active material layer 120 may have a volume resistivity of 200 Ω·cm to 15,000 Ω·cm or 300 Ω·cm to 1,000 Ω·cm.

Within the above range, a battery having high initial discharge capacity and excellent capacity retention rate may be implemented while sufficiently improving the electrical conductivity of the cathode active material layer.

The volume resistivity of the cathode active material layer may be measured using an electrode measuring device (e.g., a device from HIOKI Corp.). The volume resistivity (Ω cm) of the cathode active material layer at room temperature may be determined using the electrode measuring device. For example, a pressure of about 2 tons may be applied to the cathode active material layer to reduce the pore volume within the active material layer, and then the volume resistivity may be measured.

According to exemplary embodiments, a loading amount of the cathode active material layer may be 9 mg/cm² to 35 mg/cm². According to some embodiments, the loading amount of the cathode active material layer may be 9 mg/cm² or more, 20 mg/cm² or more. In addition, the loading amount may be 23 mg/cm² to 32 mg/cm², 25 mg/cm² to 30 mg/cm², or 25 mg/cm² to 27 mg/cm². Within the above range, the battery may be made lighter in weight, and a battery having a high energy density may be implemented.

According to exemplary embodiments, the density of the cathode active material layer may be 1.8 g/cc to 2.8 g/cc. Within the above range, the energy density of the cathode may be improved, and a thin-profile battery may be provided.

According to exemplary embodiments, the cathode for a lithium secondary battery may have an electrode capacity of 4 mAh/cm² to 6 mAh/cm². Within the above range, a largecapacity battery may be implemented.

The lithium secondary battery according to exemplary embodiments of the present disclosure includes a cathode, an anode facing the cathode, and a solid electrolyte layer interposed between the cathode and the anode.

FIG. 2 is a schematic cross-sectional view illustrating a secondary battery according to exemplary embodiments.

Referring to FIG. 2, the secondary battery may include a cathode 100, a solid electrolyte layer 130 and an anode 140. The solid electrolyte layer 130 may be disposed between the cathode 100 and the anode 140.

The cathode 100 includes the cathode current collector 110 and the cathode active material layer 120 disposed on one surface of the cathode current collector 110. The details of the cathode 100, the cathode current collector 110 and the cathode active material layer 120 may be the same as those described above.

The anode 140 may include an anode active material layer 150. The anode active material layer 150 includes an anode active material, and a carbon-based active material and/or a silicon-based active material may be used as the anode active material.

The carbon-based active material may include crystalline carbon, amorphous carbon, carbon composites, carbon fibers or the like.

For example, the amorphous carbon may include hard carbon, cokes, mesocarbon microbeads, mesophase pitch-based carbon fibers, etc. For example, the crystalline carbon may include natural graphite, artificial graphite, graphite cokes, graphite MCMB, graphite MPCF, etc.

According to exemplary embodiments, as the carbon-based active material, natural graphite and/or artificial graphite may be used, and in one embodiment, a mixture of natural graphite and artificial graphite may be used.

The silicon-based active material may provide significantly increased capacity characteristics. The silicon-based active material may include Si, SiOₓ (0<x<2), silicon-carbon composites, or metal-doped silicates. The metal may include lithium and/or magnesium.

The silicon-based active material may, for example, provide a significantly higher capacity compared to the carbon-based material. However, the silicon-based active material may undergo excessive expansion at high temperatures or during repeated charge/discharge cycles, thereby degrading the stability of the battery.

Accordingly, the carbon-based active material may be used together with the silicon-based active material as the anode active material.

In one embodiment, as the anode active material, metal-based active materials such as lithium (Li), gold (Au), platinum (Pt), palladium (Pd), silver (Ag), aluminum (Al), bismuth (Bi), tin (Sn), zinc (Zn), and the like may be used.

The anode active material layer 150 may further include a binder and may also include a conductive material. As the binder and conductive material, materials substantially the same as or similar to the binder and conductive material for the cathode described above may be used. In one embodiment, an SBR-based binder may be used as the anode binder.

For example, the above-described anode active material may be dispersed in a solvent together with a binder, a conductive material, and the like to prepare an anode composition. An anode current collector 160 may be coated with the anode composition, and then dried and roll-pressed to form the anode active material layer 150.

The anode current collector 160 may include a metal such as stainless steel, nickel, aluminum, titanium, copper, magnesium, iron, zinc, or an alloy thereof.

In some embodiments, a metal layer may additionally be formed between the anode active material layer 150 and the anode current collector 160. The metal layer may include lithium or a lithium alloy. For example, the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy, etc.

The metal layer may also be included as the anode active material layer, and may enhance lithium storage characteristics.

According to exemplary embodiments, the solid electrolyte layer 130 may include the above-described sulfide-based electrolyte. In one embodiment, the solid electrolyte layer 130 may include a Li₂S-P₂S₅-based material.

In one embodiment, the solid electrolyte layer 130 may include an argyrodite-type compound which may be represented by Li₇-ₓPS₆-ₓClₓ (0≤x≤2), Li₇₋ₓPS₆₋ₓBrₓ (0≤x≤2), Li₇₋ₓPS₆₋ₓIₓ (0≤x≤2), etc.

The solid electrolyte layer 130 may further include a binder together with the above-described solid electrolyte. The solid electrolyte layer 130 may include a polymer material that is substantially the same as or similar to the binder for forming the above-described cathode.

For example, after preparing a solid electrolyte composition including a solid electrolyte and a binder, the solid electrolyte layer 130 may be formed through a compression molding process using a mold.

The cathode active material layer 120 and the anode active material layer 150 may each be in contact with the solid electrolyte layer 130. For example, the cathode active material layer 120 may be in contact with one surface of the solid electrolyte layer 130, and the anode active material layer 150 may be in contact with the other surface of the solid electrolyte layer 130 opposite to the one surface.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

### Example 1

### (1) Preparation of cathode

A cathode slurry was prepared by mixing 80 parts by weight ("wt parts") of Li[Ni_{0.6}Co_{0.2}Mn_{0.2}]O₂ as an active material, 18.5 wt parts of Li₆PS₅Cl as a solid electrolyte, 0.5 wt parts of carbon nanotubes (having a specific surface area of 175 m²/g, and a diameter of 10 nm to 15 nm), and 1 wt part of polyvinylidene fluoride (PVdF) as a binder. The cathode slurry was uniformly applied to an aluminum foil with a thickness of 15 µm, and then vacuum-dried and roll-pressed to form a cathode active material layer having a density of 2.5 g/cc, thereby preparing a cathode. The diameter values of the carbon nanotubes were described as minimum and maximum values.

The specific surface area and diameter of the carbon nanotubes were measured according to the above-described method.

### (2) Manufacture of lithium secondary battery

An anode slurry was prepared by mixing artificial graphite as an active material, carbon nanotubes (CNTs) as a conductive material, and SBR as a binder in a weight ratio of 92:5:3. The anode slurry was applied to a copper foil with a thickness of 15 µm, and then dried and roll-pressed to prepare an anode.

A slurry was prepared by mixing Li₆PS₅Cl as a solid electrolyte and SBR as a binder in a weight ratio of 97:3, and then applied to a release film, followed by drying and roll-pressing to prepare a solid electrolyte sheet.

The solid electrolyte sheet was cut into a size of 3 cm × 4 cm, and the cathode and the anode were respectively stacked on both surfaces of the solid electrolyte sheet to form an electrode cell.

Thereafter, tab portions of the cathode and the anode were respectively welded, and the welded cathode/solid electrolyte sheet/anode assembly was placed in a pouch and sealed.

### Examples 2 to 8 and Comparative Examples 1 to 6

Cathodes and lithium secondary batteries were manufactured in the same manner as in Example 1, except that the contents of the solid electrolyte and carbon nanotubes, as well as the specific surface area and diameter of the carbon nanotubes were adjusted as shown in Table 1 below during the preparation of the cathode slurry.

**[TABLE 1]**

| | Solid electrolyte | Carbon nanotube | | |
|---|---|---|---|---|
| | Content (wt. parts) | Content (wt. parts) | Specific surface area (m²/g) | Diameter (nm) |
| Example 1 | 18.5 | 0.5 | 175 | 10 - 15 |
| Example 2 | 18.25 | 0.75 | 175 | 10 - 15 |
| Example 3 | 18 | 1 | 175 | 10 - 15 |
| Example 4 | 18.5 | 0.5 | 250 | 8-10 |
| Example 5 | 18.25 | 0.75 | 250 | 8-10 |
| Example 6 | 18 | 1 | 250 | 8-10 |
| Example 7 | 18.25 | 0.75 | 150 | 15 - 18 |
| Example 8 | 18.25 | 0.75 | 135 | 18 - 20 |
| Comparative Example 1 | 17.5 | 1.5 | 175 | 10 - 15 |
| Comparative Example 2 | 17.5 | 1.5 | 250 | 8-10 |
| Comparative Example 3 | 18.75 | 0.25 | 175 | 10 - 15 |
| Comparative Example 4 | 18.75 | 0.25 | 250 | 8-10 |
| Comparative Example 5 | 18.25 | 0.75 | 310 | 7-9 |
| Comparative Example 6 | 18.25 | 0.75 | 600 | 5-7 |

### Comparative Example 7

A cathode and a lithium secondary battery were manufactured in the same manner as in Example 1, except that the cathode slurry was prepared by mixing 80 wt parts of Li[Ni_{0.6}Co_{0.2}Mn_{0.2}]O₂ as an active material, 18.25 wt parts of Li₆PS₅Cl as a solid electrolyte, 0.75 wt parts of Super P (having a specific surface area of 250 m²/g, and a spherical particle diameter of 30 nm), and 1 wt part of polyvinylidene fluoride (PVdF) as a binder.

### Experimental examples

According to the experimental examples below, the physical properties of the cathodes and lithium secondary batteries of the examples and comparative examples were measured and evaluated. The measurement results are shown in Table 2.

### (1) Measurement of volume resistivity of cathode active material layer

A pressure of about 2 tons was applied to the cathodes of the examples and comparative examples at 25°C to reduce the pore volume within the active material layer, and then the volume resistivity of the cathode active material layer was measured using an electrode measuring device (manufactured by HIOKI Corp.). However, when the volume resistivity was 10⁶ Ω·cm or more, measurement was impossible (denoted by "-" in Table 2).

### (2) Evaluation of battery capacity

For the batteries of the examples and comparative examples, charging (CC-CV at 2C with a cut-off 4.27V) and discharging (CC at 2C down to 2.5V) at 25°C were defined as one cycle, and charging/discharging was performed for one cycle, then the initial discharge capacity was measured.

### (3) Evaluation of cycle life characteristics

For the batteries of the examples and comparative examples, one cycle was defined as charging (CC-CV 0.33C, 4.27V cut-off) and discharging (CC 0.33C, 2.5V cut-off) at room temperature, under conditions based on 2C-rated capacity. Charging/discharging was repeated for 50 cycles.

The capacity retention rate was calculated as the percentage obtained by dividing the discharge capacity after 50 cycles by the initial discharge capacity.

**[TABLE 2]**

| | Cathode active material layer | Battery | |
|---|---|---|---|
| | Volume resistivity (Ω·cm) | Initial discharge capacity (mAh/g) | Capacity retention rate (%) |
| Example 1 | 13580 | 100.4 | 90.5 |
| Example 2 | 686 | 118.8 | 95.7 |
| Example 3 | 190 | 95.8 | 93 |
| Example 4 | 13449 | 105.9 | 91.1 |
| Example 5 | 882 | 106.3 | 93.2 |
| Example 6 | 309 | 98.3 | 90.5 |
| Example 7 | 810 | 110.2 | 96.2 |
| Example 8 | 924 | 109.0 | 96.7 |
| Comparative Example 1 | 5 | 80 | 69.1 |
| Comparative Example 2 | 13 | 77.1 | 50.9 |
| Comparative Example 3 | - | 32.7 | 73.8 |
| Comparative Example 4 | - | 47 | 75.7 |
| Comparative Example 5 | 1261 | 85.4 | 87.3 |
| Comparative Example 6 | 1 | 80.3 | 70.3 |
| Comparative Example 7 | - | 78.5 | 68.1 |

Referring to Table 2 above, the batteries of the examples exhibited high initial discharge capacities and maintained high capacities even after repeated charge/discharge cycles of the batteries, thereby showing improved cycle life characteristics.

The batteries of the comparative examples exhibited lower initial discharge capacities and capacity retention rates than the batteries of the examples, and exhibited degraded battery characteristics.

The batteries of Comparative Examples 1 and 2 included cathode active material layers containing carbon nanotubes in excessively large amounts. Accordingly, the capacity retention rates of the batteries were significantly reduced, thereby deteriorating the cycle life characteristics.

The batteries of Comparative Examples 3 and 4 included cathode active material layers containing carbon nanotubes in excessively small amounts. As a result, the initial discharge capacities of the batteries were too low, and high-capacity batteries could not be implemented.

The batteries of Comparative Examples 5 and 6 included cathode active material layers containing carbon nanotubes having excessively large specific surface areas. Accordingly, both the initial discharge capacity and capacity retention rate of the batteries were inferior to the batteries of the examples.

The battery of Comparative Example 7 included a cathode active material layer containing carbon black instead of carbon nanotubes. Carbon black has a relatively higher percolation threshold for electron conductivity than carbon nanotubes, and as a result, exhibited lower initial discharge capacity and capacity retention rate than the batteries of Examples 2, 5, 7 and 8, which used the same amount of carbon nanotubes.

The contents described above are merely examples of applying the principles of the present disclosure, and other configurations may be further included without departing from the scope of the present disclosure.

## Claims

1. A cathode for a lithium secondary battery comprising:
a cathode current collector; and
a cathode active material layer,
wherein the cathode active material layer is disposed on at least one surface of the cathode current collector,
the cathode active material layer comprises a cathode active material, a solid electrolyte and carbon nanotubes,
the carbon nanotube has a specific surface area of 100 m²/g to 300 m²/g, and
a content of the carbon nanotube is more than 0.25% by weight and less than 1.5% by weight based on the total weight of the cathode active material layer.

2. The cathode for a lithium secondary battery according to claim 1, wherein the content of the carbon nanotubes is 0.5% by weight to 1% by weight based on the total weight of the cathode active material layer.

3. The cathode for a lithium secondary battery according to claim 1 or 2, wherein the carbon nanotubes have a specific surface area of 150 m²/g to 250 m²/g.

4. The cathode for a lithium secondary battery according to any one of claims 1 to 3, wherein the carbon nanotubes have an average diameter of 0.4 nm to 30 nm.

5. The cathode for a lithium secondary battery according to any one of claims 1 to 4, wherein a content of the solid electrolyte is 5% by weight to 30% by weight based on the total weight of the cathode active material layer.

6. The cathode for a lithium secondary battery according to any one of claims 1 to 5, wherein a content of the cathode active material is 70% by weight to 90% by weight based on the total weight of the cathode active material layer.

7. The cathode for a lithium secondary battery according to any one of claims 1 to 6, wherein a ratio of the content of the solid electrolyte to the content of the carbon nanotube is 5 to 40 based on the total weight of the cathode active material layer.

8. The cathode for a lithium secondary battery according to any one of claims 1 to 7, wherein the solid electrolyte is a sulfide-based solid electrolyte.

9. The cathode for a lithium secondary battery according to claim 8, wherein the sulfide-based solid electrolyte comprises at least one selected from the group consisting of a LiP-S-based solid electrolyte, a Li-P-Ge-S-based solid electrolyte, and a Li-Si-O-S-Cl-based solid electrolyte.

10. The cathode for a lithium secondary battery according to any one of claims 1 to 9, wherein the cathode active material comprises a lithium metal oxide containing nickel.

11. The cathode for a lithium secondary battery according to claim 10, wherein a content of nickel in the lithium metal oxide is 60 mol% or more based on the total number of moles of elements excluding lithium and oxygen.

12. The cathode for a lithium secondary battery according to any one of claims 1 to 11, wherein the cathode active material layer has a volume resistivity of 100 Ω·cm to 50000 Ω·cm.

13. The cathode for a lithium secondary battery according to any one of claims 1 to 12, wherein a loading amount of the cathode active material layer is 9 mg/cm² to 35 mg/cm².

14. A lithium secondary battery comprising:
the cathode according to any one of claims 1 to 13;
an anode disposed opposite to the cathode; and
a solid electrolyte layer interposed between the cathode and the anode.
